(19) Europäisches Patentamt
European Patent Office
Office européen des brevets

(11) **EP 1 291 614 A1**

(12) **EUROPÄISCHE PATENTANMELDUNG**

(43) Veröffentlichungstag:
**12.03.2003 Patentblatt 2003/11**

(51) Int Cl.⁷: **G01B 5/008**, G01B 11/00,
G01B 21/04

(21) Anmeldenummer: **01121528.2**

(22) Anmeldetag: **08.09.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **TRUMPF Werkzeugmaschinen GmbH
+ Co. KG**
**71254 Ditzingen (DE)**

(72) Erfinder:
• **Horn, Armin, Dr.**
**71272 Renningen (DE)**
• **Krauss, Jochen**
**71254 Ditzingen (DE)**

(74) Vertreter: **KOHLER SCHMID + PARTNER**
**Patentanwälte**
**Ruppmannstrasse 27**
**70565 Stuttgart (DE)**

(54) **Koordinatenmessung mit Geradheits- und Winkelkalibrierung sowie anschliessender Messwertkorrektur**

(57)     Im Rahmen eines Verfahrens zur Erfassung der Geometrie von Werkstücken werden ein Objekterfassungsmittel (13) und das betreffende Werkstück (4) mit einer geführten Arbeitsbewegung relativ zueinander bewegt. Dabei wird das Werkstück (4) mittels des Objekterfassungsmittels (13) ausschnittweise erfasst. Über die Positionen des Objekterfassungsmittels (13) gegenüber dem Werkstück (4) werden die Positionen erfasster Werkstückausschnitte bestimmt. Vor einer Arbeitsbewegung von Objekterfassungsmittel (13) und Werkstück (4) wird eine Geradheits- und/oder eine Winkelkalibrierung vorgenommen und dabei erforderlichenfalls wenigstens eine Korrekturgröße bestimmt. Diese Korrekturgröße wird gegebenenfalls bei zumindest einer anschließenden Arbeitsbewegung bei der Bestimmung der Positionen erfasster Werkstückausschnitte berücksichtigt.

Eine Vorrichtung zur Erfassung der Geometrie von Werkstücken weist entsprechend eine Positionsbestimmungseinrichtung (9, 10, 17) mit einer Kalibriereinrichtung auf.

Fig. 1

EP 1 291 614 A1

**Beschreibung**

Die Erfindung betrifft ein Verfahren zur Erfassung der Geometrie von Werkstücken, im Rahmen dessen ein Objekterfassungsmittel und das betreffende Werkstück mit einer geführten Arbeitsbewegung relativ zueinander bewegt werden und dabei das Werkstück mittels des Objekterfassungsmittels ausschnittweise erfasst wird. Die Arbeitsbewegung von Objekterfassungsmittel und Werkstück wird dabei entlang wenigstens einer Führungsbahn in einer Führungsrichtung bzw. als zweiachsige Bewegung mit zwei unter einem Achsenwinkel zueinander verlaufenden Führungsachsen ausgeführt. In dem erstgenannten Fall werden die Positionen erfasster Werkstückausschnitte jeweils bestimmt über die Position des Objekterfassungsmittels gegenüber dem Werkstück in Führungsrichtung der Arbeitsbewegung sowie über die Position des Objekterfassungsmittels gegenüber dem Werkstück quer zu der Führungsrichtung, wobei quer zu der Führungsrichtung ein Sollverlauf der Führungsbahn berücksichtigt wird. In dem zweitgenannten Fall erfolgt die Positionsbestimmung erfasster Werkstückausschnitte jeweils über die Position des Objekterfassungsmittels gegenüber dem Werkstück in Richtung der ersten Führungsachse sowie über die Position des Objekterfassungsmittels gegenüber dem Werkstück in Richtung der zweiten Führungsachse, wobei für den Achsenwinkel der Führungsachsen ein Sollwert berücksichtigt wird.

Weiterhin betrifft die Erfindung Vorrichtungen zur Erfassung der Geometrie von Werkstücken, die zur Durchführung der vorstehenden Verfahren ausgebildet und die im Einzelnen in den Oberbegriffen der Patentansprüche 5 und 7 beschrieben sind.

Derartige Verfahren und derartige Vorrichtungen dienen dazu, Werkstücke oder Werkstückteile, die beispielsweise aufgrund ihrer Größe nicht durch eine einzelne Aufnahme mit ausreichender Auflösung erfasst werden können, umfassend abzubilden. Aus Einzelaufnahmen, die jeweils einen Ausschnitt des abzubildenden Objekts bzw. des abzubildenden Objekt-Teilbereichs erfassen, wird dabei die gewünschte Gesamtabbildung zusammengesetzt. Zu diesem Zweck muss die Lage der einzeln aufgenommenen Objektausschnitte zueinander definiert sein. Eine derartige Lagebestimmung der Objektausschnitte erfolgt auf dem Umweg über die Erfassung derjenigen Positionen, welche das Objekterfassungsmittel bei der Aufnahme der Objektausschnitte einnimmt. Jedem Objektausschnitt ist eine ganz bestimmte Position des Objekterfassungsmittels zugeordnet. Eine den tatsächlichen Verhältnissen exakt entsprechende Abbildung des betreffenden Objektes bzw. des betreffenden Objekt-Teilbereichs setzt notwendigerweise eine genaue Bestimmung der von dem Objekterfassungsmittel bei Erfassung der Objektausschnitte eingenommenen Positionen voraus.

Verfahren und Vorrichtungen der eingangs genannten Art sind offenbart in US-A-5,184,217. Im Falle des Standes der Technik ist ein Objekterfassungsmittel in Form einer CCD-Anordnung auf einem Schlitten in Richtung einer ersten Koordinatenachse verschieblich montiert. Der Schlitten seinerseits wird an einem die zu erfassenden Werkstücke lagernden Tisch in Richtung einer zweiten Koordinatenachse bewegbar geführt. Der Antrieb der CCD-Anordnung in Richtung der ersten Koordinatenachse sowie der Antrieb des mit der CCD-Anordnung versehenen Schlittens in Richtung der zweiten Koordinatenachse wird jeweils mittels eines Gleichstrommotors bewerkstelligt. Zur Erfassung der Geometrie eines Werkstückes wird die CCD-Anordnung ausgehend von einer Bezugsposition über das Werkstück hinweg bewegt. Mit nacheinander eingenommenen Positionen der CCD-Anordnung in Richtung der ersten Koordinatenachse wird dabei der Schlitten mit der CCD-Anordnung in Richtung der zweiten Koordinatenachse verfahren. Während dieser Verfahrbewegungen mit relativ zu dem Schlitten ortsunveränderlicher CCD-Anordnung nimmt die CCD-Anordnung jeweils Ausschnitte des abzubildenden Werkstückes auf. Die Positionen dieser Werkstückausschnitte werden über die jeweiligen Positionen der CCD-Anordnung definiert. Dabei wird bei jeder Fahrt der CCD-Anordnung unterstellt, dass sich die Position der CCD-Anordnung bei ihrer Verfahrbewegung lediglich in Richtung der zweiten Koordinatenachse ändert. In Richtung der ersten Koordinatenachse wird jeweils eine gleichbleibende Position der CCD-Anordnung unterstellt. Es wird also von einem ideal geradlinigen Verlauf der sich in Richtung der zweiten Koordinatenachse erstreckenden Führungsbahn der CCD-Anordnung in Richtung der ersten Koordinatenachse ausgegangen. Gleichzeitig wird unterstellt, dass die zweite Führungsachse, d.h. die Achse der geführten Bewegung der CCD-Anordnung in Richtung der zweiten Koordinatenachse, exakt senkrecht verläuft zu der ersten Führungsachse, d.h. zu der Achse der geführten, schrittweisen Bewegung der CCD-Anordnung in Richtung der ersten Koordinatenachse. Nur unter dieser Voraussetzung kann davon ausgegangen werden, dass sich bei den Verfahrbewegungen der CCD-Anordnung in Richtung der zweiten Koordinatenachse jeweils nur deren Koordinaten in Richtung der zweiten Koordinatenachse, nicht aber die Koordinaten der CCD-Anordnung in Richtung der ersten Koordinatenachse ändern.

Nachdem nun aber auch an hochgenauen Vorrichtungen der vorliegenden Art etwa fertigungsbedingte oder durch Umgebungseinflüsse wie etwa Temperaturschwankungen verursachte Toleranzen auftreten und folglich weder eine ideale Geradlinigkeit noch eine ideale Rechtwinkligkeit der Führungen der CCD-Anordnung zu gewährleisten ist, ergeben sich im Falle des Standes der Technik Abweichungen zwischen den bestimmten und den tatsächlichen Positionen der CCD-Anordnung bei der Erfassung der Werkstückausschnitte. Folglich sind auch diejenigen Positionen der erfassten Werkstückausschnitte, die bei deren Zusammensetzen zu der gewünschten Gesamtabbildung zugrunde gelegt werden, fehlerbehaftet. In der Folge ergibt sich eine Gesamtabbildung, die nicht exakt den tatsächlichen Verhältnissen entspricht.

Die Genauigkeit des gattungsbildenden Standes der Technik zu erhöhen, hat sich die vorliegende Erfindung zum Ziel gesetzt.

Verfahrensbezogen wird diese Aufgabe durch die Merkmalskombinationen der Patentansprüche 1 und 3, vorrichtungsbezogen durch die Merkmalskombinationen der Patentansprüche 5 und 7 gelöst.

Gemäß den Patentansprüchen 1 und 5 wird vor der Erfassung der Geometrie des betreffenden Werkstückes zunächst überprüft, ob die Führungsbahn, entlang derer das Objekterfassungsmittel und das zu erfassende Werkstück relativ zueinander bewegt werden, den bei der Bestimmung der Positionen des Objekterfassungsmittels gegenüber dem Werkstück an sich unterstellten Idealverlauf aufweist. Weicht der tatsächliche Verlauf der Führungsbahn von dem Ideal- oder Sollverlauf ab, so werden Korrekturgrößen definiert, die bei der oder den späteren Arbeitsbewegungen von Objekterfassungsmittel und Werkstück in die Bestimmung derjenigen Positionen eingehen, welche das Objekterfassungsmittel gegenüber dem Werkstück bei der Erfassung der Werkstückausschnitte einnimmt. Auf diese Art und Weise wird sichergestellt, dass die erfassten Positionen des Objekterfassungsmittels gegenüber dem Werkstück mit den tatsächlichen Positionen übereinstimmen. Damit ist aber auch gewährleistet, dass den durch das Objekterfassungsmittel erfassten Werkstückausschnitten ihre tatsächlichen Positionen zugeordnet werden. Beim Zusammensetzen der einzelnen Werkstückausschnitte ergibt sich so eine Gesamtabbildung, die hochgenau mit den tatsächlichen Verhältnissen übereinstimmt.

Entsprechend ist ausweislich der Patentansprüche 3 und 7 eine Achsenwinkelüberprüfung und -kalibrierung vorgesehen. Wird eine Abweichung des tatsächlichen Achsenwinkels von dem Sollwinkel festgestellt, so geht diese über entsprechende Korrekturgrößen in die Bestimmung der Positionen des Objekterfassungsmittels gegenüber dem Werkstück bei der Erfassung der Werkstückausschnitte und auf diesem Wege in die Bestimmung der Positionen der Werkstückausschnitte selbst ein.

Besondere Ausführungsarten der in den Patentansprüchen 1, 3, 5 und 7 beschriebenen Verfahren und Vorrichtungen ergeben sich aus den abhängigen Patentansprüchen 2, 4, 6, 8 und 9.

Dabei betreffen die Patentansprüche 2 und 6 den Fall, dass das Objekterfassungsmittel und das betreffende Werkstück entlang einer geradlinigen Führungsbahn relativ zueinander bewegt werden. Mit dem gespannten Draht, der entsprechenden Schnur od. dgl. gemäß Patentanspruch 6 lässt sich dabei auf einfache Art und Weise eine Kalibrierlinie mit Sollverlauf erzeugen.

Die in den Patentansprüchen 4 und 8 beschriebenen Erfindungsvarianten zeichnen sich durch eine besondere Genauigkeit aus, nachdem in diesen Fällen die erfindungsgemäße Geradheits- und die erfindungsgemäße Achsenwinkelüberprüfung und -kalibrierung in Kombination miteinander vorgesehen sind. Auch dabei empfiehlt es sich der Einfachheit halber zur Erzeugung der benötigten Kalibrierlinie einen gespannten Draht, eine entsprechende Schnur od. dgl. zu verwenden (Patentanspruch 9).

Nachstehend wird die Erfindung anhand beispielhafter schematischer Darstellungen näher erläutert. Es zeigen:

Figur 1      eine Vorrichtung zur Erfassung der Geometrie von Werkstücken in der schematisierten Seitenansicht,

Figur 2      die Vorrichtung nach Figur 1 in der schematisierten Draufsicht mit einer Einrichtung zur Geradheitsüberprüfung bzw. -kalibrierung,

Figuren 3 und 4      einen Ausschnitt aus Figur 2 zusätzlich mit einer Einrichtung zur Rechtwinkligkeitsüberprüfung bzw. -kalibrierung sowie

Figur 5      eine graphische Darstellung zur Veranschaulichung mathematischer Zusammenhänge.

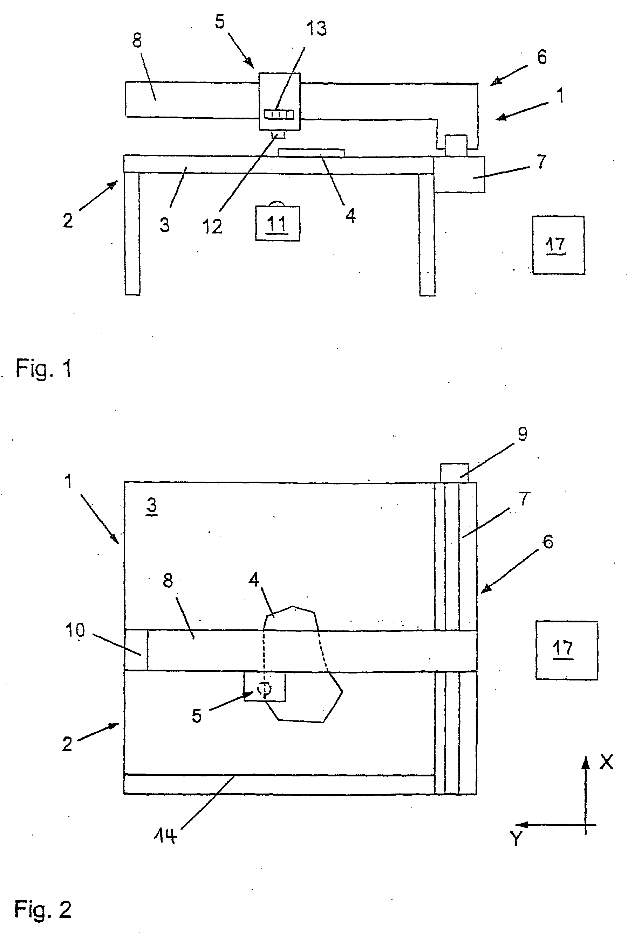

Ausweislich der Figuren 1 und 2 umfasst eine Vorrichtung 1 zur Erfassung der Geometrie von Werkstücken einen Koordinatentisch 2 mit einer transparenten Auflage 3, auf welcher ein Werkstück 4 abgelegt ist. Weiterhin vorgesehen ist eine CCD-Kamera 5. Mittels einer Koordinatenführung 6 ist diese relativ zu dem Werkstück 4 geführt bewegbar. Die Führungsachsen dieser Bewegung sind ausweislich der Figuren 2 bis 4 als x-Achse sowie als y-Achse bezeichnet und spannen eine Horizontalebene auf, in welcher sich die CCD-Kamera 5 bewegt.

Gebildet wird die Koordinatenführung 6 der CCD-Kamera 5 von einer an dem Koordinatentisch 2 in Richtung der x-Achse verlaufenden X-Schiene 7 sowie von einem an der X-Schiene 7 in Richtung der y-Achse vorkragenden Ausleger 8. Zum Antrieb des Auslegers 8 an der X-Schiene 7 dient ein X-Motor 9. Entsprechend ist ein Y-Motor 10 zum Verfahren der CCD-Kamera 5 entlang dem Ausleger 8 vorgesehen. Die y-Achse gibt die Führungsrichtung der CCD-Kamera 5 an dem Ausleger 8 wieder.

Synchron mit der CCD-Kamera 5 bewegt wird ein Blitzgerät 11, das an der von der CCD-Kamera 5 abliegenden Seite der Auflage 3 vorgesehen ist. Dabei liegt das Blitzgerät 11 einem Objektiv 12 der CCD-Kamera 5 gegenüber. Hinter dem Objektiv 12 ist im Innern der CCD-Kamera 5 ein Objekterfassungsmittel 13 in Form einer Anordnung von CCD-Elementen untergebracht. Die CCD-Kamera 5 ist ebenso wie das Blitzgerät 11 herkömmlicher Bauart.

Entlang dem in Figur 2 unten liegenden Rand der Auflage 3 des Koordinatentisches 2 ist eine Kalibrierlinie 14 vorgesehen, die in dem gezeigten Beispielsfall von einem unterhalb der transparenten Auflage 3 gespannten Draht gebildet wird. Die Kalibrierlinie 14 verläuft aufgrund der Drahtspannung geradlinig und erstreckt sich in Richtung der y-Achse.

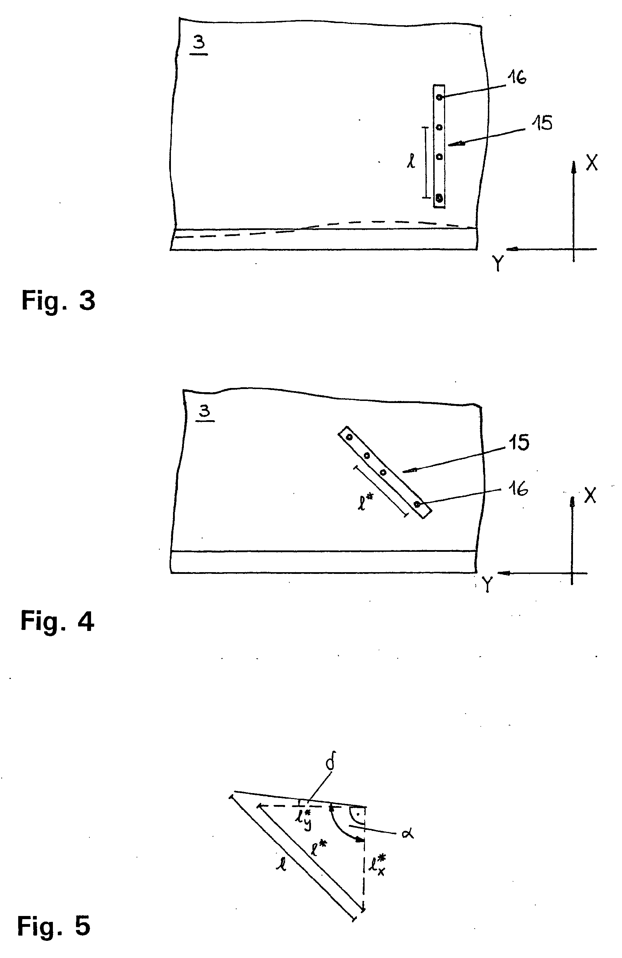

Ein Referenzteil 15, wie es in den Figuren 3 und 4 gezeigt wird, ist stabartig ausgebildet und mit einer Mehrzahl von in seiner Längsrichtung gegeneinander versetzten Bohrungen 16 versehen. Bei Bedarf lässt sich das Referenzteil 15 auf der Auflage 3 des Koordinatentischs 2 ablegen und dort beliebig ausrichten. Mit zwei unterschiedlichen Winkelstellungen ist das Referenzteil 15 in den Figuren 3 und 4 gezeigt.

Sämtliche Funktionen der Vorrichtung 1 werden von einem Zentralrechner 17 überwacht und gesteuert.

Ist nun die unregelmäßige Außenkontur des Werkstückes 4 zu erfassen, so werden an der Vorrichtung 1 zunächst eine Geradheits- sowie eine Rechtwinkligkeitsüberprüfung und -kalibrierung vorgenommen.

Zum Zwecke der Geradheitsüberprüfung und -kalibrierung wird zunächst der Ausleger 8 in Richtung der x-Achse in eine Position verfahren, bei deren Einnahme die CCD-Kamera 5 mit dem Objekterfassungsmittel 13 über der Kalibrierlinie 14 angeordnet ist. Dann wird die Kalibrierlinie 14 in Richtung der y-Achse mit dem an dem Ausleger 8 entlang bewegten Objekterfassungsmittel 13 abgefahren. Dabei erfasst das Objekterfassungsmittel 13 in Richtung der y-Achse aufeinanderfolgende Ausschnitte der Kalibrierlinie 14. Die Ausschnitterfassung erfolgt auf herkömmliche Art und Weise unter intermittierender Betätigung des Blitzgerätes 11.

Die erfassten Ausschnitte der Kalibrierlinie 14 werden mittels des Zentralrechners 17 zusammengesetzt und es ergibt sich so der Verlauf der Kalibrierlinie 14, wie er sich bei Erfassung durch das Objekterfassungsmittel 13 darstellt und wie er in Figur 3 gestrichelt und stark überzeichnet gezeigt ist. Dieser erfasste Verlauf der Kalibrierlinie 14 wird durch den Zentralrechner 17 mit dem in diesem hinterlegten tatsächlichen Verlauf der Kalibrierlinie 14 verglichen. Die dabei festgestellten Abweichungen indizieren, dass die in Richtung der y-Achse verlaufende Führungsbahn des Objekterfassungsmittels 13 anders als der tatsächliche Verlauf der Kalibrierlinie 14 nicht gerade ist. Von dem Zentralrechner 17 werden Korrekturgrößen bestimmt, welche die Geradheitsabweichungen der Führungsbahn des Objekterfassungsmittels 13 berücksichtigen.

Zur Rechtwinkligkeitsüberprüfung und -kalibrierung wird das Referenzteil 15 zunächst mit seiner Ausrichtung gemäß Figur 3, d.h. im wesentlichen parallel zu der x-Achse, auf der Auflage 3 des Koordinatentischs 2 abgelegt. Anschließend wird das Referenzteil 15 mit der CCD-Kamera 5 überfahren. Dabei wird das Referenzteil 15 mit Hilfe des Objekterfassungsmittels 13 ausschnittweise erfasst. Der Zentralrechner 17 bestimmt anhand der erfassten Ausschnitte einen Abstand 1 von zwei Bohrungen 16 des Referenzteils 15. Die von den beiden Bohrungen 16 begrenzte Strecke bildet eine Kalibrierstrecke; bei dem Abstand 1 der Bohrungen 16 handelt es sich um die Länge der Kalibrierstrecke.

Nach der beschriebenen Längenbestimmung wird das Referenzteil 15 um einen beliebigen Drehpunkt gedreht und mit der in Figur 4 gezeigten Winkelstellung ausgerichtet. Im gezeigten Beispielsfall verläuft das Referenzteil 15 nun unter einem Winkel von etwa 45° gegen die x-Achse geneigt. Auch in dieser Lage wird das Referenzteil 15 von der CCD-Kamera 5 überfahren. Erneut wird von dem Objekterfassungsmittel 13 das Referenzteil 15 ausschnittweise erfasst. Anhand der erfassten Ausschnitte des Referenzteils 15 bestimmt der Zentralrechner 17 einen Abstand bzw. eine Länge l* zwischen denjenigen Bohrungen 16, deren Abstand auch bereits bei in Richtung der x-Achse verlaufendem Referenzteil 15 ermittelt worden war.

Unterstellt wird, dass die Führung des Objekterfassungsmittels 13 in Richtung der x-Achse genau und fehlerfrei ist und dass bei der Messung der Abstände l, l* keine Längenmessfehler auftreten. Der Winkelfehler $\delta$ hat sich dementsprechend bei der Messung des Abstandes l* bemerkbar gemacht.

Gemäß Figur 5 ergibt sich:

$$\delta = \alpha - 90°,$$

wobei $\alpha$ der Achsenwinkel zwischen der x- und der y-Achse, also zwischen den Führungsachsen des Objekterfassungsmittels 13, ist.

Nach dem Kosinussatz gilt:

$$\cos\alpha = \frac{l^2 - l_x^{*2} - l_y^{*2}}{2 l_x^* l_y^*}.$$

Im Interesse einer möglichst großen Genauigkeit wird die vorstehend beschriebene Bestimmung von Längen bzw. Abständen l, l* nacheinander für unterschiedliche Paare von Bohrungen 16 durchgeführt. In jedem Fall wird ein Achsenwinkel $\alpha$ ermittelt. Für die so erhaltenen Achsenwinkel wird dann das geometrische Mittel bestimmt zu

$$\alpha = \frac{\sum\limits_i \alpha_i l_i}{\sum\limits_i l_i}$$

Ins Verhältnis gesetzt werden also einerseits die Summe aller Produkte aus den verschiedenen Achsenwinkeln und dem jeweils zugehörigen, bei Ausrichtung des Referenzteils in Richtung der x-Achse bestimmten Bohrungsabstand und andererseits die Summe aller bei Ausrichtung des Referenzteils 15 in Richtung der x-Achse gemessenen Bohrungsabstände. Es erfolgt also eine Gewichtung der einzelnen Achsenwinkel in Abhängigkeit von dem zugeordneten, bei Ausrichtung des Referenzteils 15 in Richtung der x-Achse bestimmten Bohrungsabstand.

Anhand des durch Mittelung bestimmten Achsenwinkels $\alpha$ werden schließlich von dem Zentralrechner 17 Korrekturgrößen bestimmt.

Im Anschluss an die Geradheits- und die Rechtwinkligkeitsüberprüfung und -kalibrierung wird die CCD-Kamera 5 und mit dieser das Objekterfassungsmittel 13 mit einer Arbeitsbewegung über das Werkstück 4 bewegt. Dieses wird dabei in gewohnter Weise streifenweise aufgenommen.

Zu diesem Zweck wird der Ausleger 8 in Richtung der x-Achse nacheinander in unterschiedliche Positionen bewegt. Bei jeder Position des Auslegers 8 in Richtung der x-Achse verfährt das Objekterfassungsmittel 13 an dem Ausleger 8 entlang in Richtung der y-Achse und erfasst dabei den überfahrenen Streifen des Werkstücks 4 ausschnittweise. Dabei liefern der X-Motor 9 und der Y-Motor 10 an den Zentralrechner 17 Informationen zu der Verfahrstellung des Auslegers 8 in Richtung der x-Achse sowie zu den Verfahrstellungen der CCD-Kamera 5 bzw. des Objekterfassungsmittels 13 in Richtung der y-Achse. Über den X-Motor 9 erfasst wird dabei die Position, welche der Ansatz des Auslegers 8 an der X-Schiene 7 in Richtung der x-Achse einnimmt. Über den Y-Motor 10 werden die Positionen des Objekterfassungsmittels 13 in Richtung der y-Achse erfasst.

Wäre die Führungsbahn, entlang derer das Objekterfassungsmittel 13 in Richtung der y-Achse bewegt wird, ideal gerade und beliefe sich der Achsenwinkel $\alpha$ zwischen der x-Achse und der y-Achse auf exakt 90°, so ließen sich anhand der von dem X-Motor 9 und dem Y-Motor 10 gelieferten Informationen die Positionen des Objekterfassungsmittels 13 bei der Erfassung der Ausschnitte der einzelnen Streifen des Werkstückes 4 eingenommenen Positionen fehlerfrei bestimmen. Nachdem diese Voraussetzung aber beispielsweise aufgrund fertigungsbedingter Toleranzen an der Vorrichtung 1 nicht erfüllt ist, bedarf es zur exakten Bestimmung der Positionen des Objekterfassungsmittels 13 einer Korrektur der allein aufgrund der von dem X-Motor 9 und dem Y-Motor 10 stammenden Informationen ermittelten Positionen. Diese Korrektur wird mit Hilfe der Korrekturgrößen vorgenommen, die anlässlich der vorstehend beschriebenen Geradheits- und der Rechtwinkligkeitsüberprüfung und -kalibrierung ermittelt worden sind.

Als Ergebnis werden die Positionen des Objekterfassungsmittels 13 bei der Erfassung der Ausschnitte des Werkstückes 4 hochgenau bestimmt. Damit ebenfalls hochgenau definiert sind die Positionen der erfassten Werkstückausschnitte relativ zueinander. Die Werkstückausschnitte können so mittels des Zentralrechners 17 zu einer Gesamtabbildung des Werkstücks 4 zusammengesetzt werden, die mit großer Genauigkeit den tatsächlichen Verhältnissen entspricht.

In gewohnter Weise wird die gewonnene Gesamtabbildung des Werkstücks 4 bei der Qualitätskontrolle zum Vergleich mit Fertigungsteilen oder bei der Programmierung CNC-gesteuerter Fertigungsmaschinen als Vorlage für zu fertigende Teile verwendet.

**Patentansprüche**

1. Verfahren zur Erfassung der Geometrie von Werkstücken, im Rahmen dessen ein Objekterfassungsmittel (13) und das betreffende Werkstück (4) mit einer geführten Arbeitsbewegung relativ zueinander bewegt werden und dabei das Werkstück (4) mittels des Objekterfassungsmittels (13) ausschnittweise erfasst wird, wobei die Arbeitsbewegung von Objekterfassungsmittel (13) und Werkstück (4) entlang wenigstens einer Führungsbahn in einer Führungsrichtung (y-Achse) ausgeführt wird und die Positionen erfasster Werkstückausschnitte jeweils bestimmt werden über die Position des Objekterfassungsmittels (13) gegenüber dem Werkstück (4) in Führungsrichtung (y-Achse) der Arbeitsbewegung sowie über die Position des Objekterfassungsmittels (13) gegenüber dem Werkstück (4) quer zu der Führungsrichtung (y-Achse), wobei quer zu der Führungsrichtung (y-Achse) ein Sollverlauf der Führungsbahn berücksichtigt wird, **dadurch gekennzeichnet, dass** vor einer Arbeitsbewegung das Objekterfassungsmittel (13) und eine Kalibrierlinie (14), die quer zu der Führungsrichtung (y-Achse) der Arbeitsbewegung einen dem Sollverlauf der Führungsbahn entsprechenden tatsächlichen Verlauf aufweist, entlang der Führungsbahn der Arbeitsbewegung relativ zueinander in Führungsrichtung (y-Achse) bewegt werden und dabei die Kalibrierlinie (14) mittels des Objekterfassungsmittels (13) ausschnittweise erfasst wird, dass anhand der erfassten Ausschnitte der Kalibrierlinie (14) deren Verlauf quer zu der Führungsrichtung (y-Achse) der Arbeitsbewegung bestimmt wird, dass der so bestimmte Verlauf der Kalibrierlinie (14) mit deren tatsächlichem Verlauf verglichen wird und gegebenenfalls anhand festgestellter Abweichungen wenigstens eine Korrekturgröße bestimmt wird und dass schließlich anläßlich wenigstens einer nachfolgenden Arbeitsbewegung die Positionen erfasster Werkstückausschnitte bestimmt werden über Positionen des Objekterfassungsmittels (13) gegenüber dem Werkstück (4), welche sich quer zu der Führungsrichtung (y-Achse) der Arbeitsbewegung gegebenenfalls unter Berücksichtigung einer Korrekturgröße ergeben haben.

2. Verfahren nach Anspruch 1, **dadurch gekennzeichnet, dass** die Arbeitsbewegung von Objekterfassungsmittel (13) und Werkstück (4) entlang einer geradlinigen Führungsbahn ausgeführt wird und dass dementsprechend vor einer Arbeitsbewegung das Objekterfassungsmittel (13) und eine geradlinige Kalibrierlinie (14) relativ zueinander bewegt werden.

3. Verfahren zur Erfassung der Geometrie von Werkstücken, im Rahmen dessen ein Objekterfassungsmittel (13) und das betreffende Werkstück (4) mit einer geführten Arbeitsbewegung relativ zueinander bewegt werden und dabei das Werkstück (4) mittels des Objekterfassungsmittels (13) ausschnittweise erfasst wird, wobei die Arbeitsbewegung von Objekterfassungsmittel (13) und Werkstück (4) als zweiachsige Bewegung mit zwei unter einem Achsenwinkel ($\alpha$) zueinander verlaufenden Führungsachsen (x-Achse, y-Achse) ausgeführt wird und die Positionen erfasster Werkstückausschnitte jeweils bestimmt werden über die Position des Objekterfassungsmittels (13) gegenüber dem Werkstück (4) in Richtung der einen Führungsachse (x-Achse) sowie über die Position des Objekterfassungsmittels (13) gegenüber dem Werkstück (4) in Richtung der anderen Führungsachse (y-Achse), wobei für den Achsenwinkel ($\alpha$) der Führungsachsen (x-Achse, y-Achse) ein Sollwert berücksichtigt wird, **dadurch gekennzeichnet, dass** vor einer Arbeitsbewegung eine Kalibrierstrecke mit einer ersten Winkelstellung in einer parallel zu der durch die Führungsachsen (x-Achse, y-Achse) definierten Ebene verlaufenden Ebene ausgerichtet wird, dass die ihre erste Winkelstellung einnehmende Kalibrierstrecke und das Objekterfassungsmittel (13) mit einer einer Arbeitsbewegung entsprechenden Bewegung relativ zueinander bewegt werden und dabei die Kalibrierstrecke mittels des Objekterfassungsmittels (13) ausschnittweise erfasst und anhand der erfassten Ausschnitte der Kalibrierstrecke eine Länge (1) der Kalibrierstrecke bestimmt wird, dass die Kalibrierstrecke danach wenigstens ein weiteres Mal mit einer weiteren Winkelstellung in einer parallel zu der durch die Führungsachsen (x-Achse, y-Achse) definierten Ebene verlaufenden Ebene ausgerichtet wird, dass die ihre weitere Winkelstellung einnehmende Kalibrierstrecke und das Objekterfassungsmittel (13) mit einer einer Arbeitsbewegung entsprechenden Bewegung relativ zueinander bewegt werden und dabei die Kalibrierstrecke mittels des Objekterfassungsmittels (13) ausschnittweise erfasst und anhand der erfassten Ausschnitte der Kalibrierstrecke eine Länge (l*) der Kalibrierstrecke bestimmt wird, dass die so bestimmten Längen (l, l*) der Kalibrierstrecke miteinander verglichen und gegebenenfalls anhand festgestellter Abweichungen wenigstens eine Korrekturgröße bestimmt wird und dass schließlich anläßlich wenigstens einer nachfolgenden Arbeitsbewegung die Positionen erfasster Werkstückausschnitte bestimmt werden unter Berücksichtigung eines Achsenwinkels ($\alpha$), der sich gegebenenfalls unter Einbeziehung einer Korrekturgröße ergeben hat.

4. Verfahren nach Anspruch 3, **dadurch gekennzeichnet, dass** die Arbeitsbewegung von Objekterfassungsmittel (13) und Werkstück (4) in Richtung einer ersten Führungsachse (y-Achse) entlang einer Führungsbahn ausgeführt wird, dass vor einer Arbeitsbewegung das Objekterfassungsmittel (13) und eine Kalibrierlinie (14), die in Richtung der zweiten Führungsachse (x-Achse) einen einem Sollverlauf der Führungsbahn entsprechenden Verlauf aufweist, entlang der Führungsbahn relativ zueinander in Richtung der ersten Führungsachse (y-Achse) bewegt werden und dabei die Kalibrierlinie (14) mittels des Objekterfassungsmittels (13) ausschnittweise erfasst wird, dass anhand der erfassten Ausschnitte der Kalibrierlinie (14) deren Verlauf in Richtung der zweiten Führungsachse (x-Achse) bestimmt wird, dass der so bestimmte Verlauf der Kalibrierlinie (14) mit deren tatsächlichem Verlauf verglichen wird und gegebenenfalls anhand festgestellter Abweichungen wenigstens eine Korrekturgröße bestimmt wird und dass schließlich anläßlich wenigstens einer nachfolgenden Arbeitsbewegung die Positionen erfasster Werkstückausschnitte bestimmt werden über Positionen des Objekterfassungsmittels (13) gegenüber dem Werkstück (4), welche sich in Richtung der zweiten Führungsachse (x-Achse) gegebenenfalls unter Berücksichtigung einer Korrekturgröße ergeben haben.

5. Vorrichtung zur Erfassung der Geometrie von Werkstücken, mit einem Objekterfassungsmittel (13) und einer Positionsbestimmungseinrichtung (9, 10, 17), wobei das Objekterfassungsmittel (13) und das betreffende Werkstück (4) entlang wenigstens einer Führungsbahn mit einer geführten Arbeitsbewegung relativ zueinander in einer Führungsrichtung (y-Achse) bewegbar sind und dabei das Werkstück (4) mittels des Objekterfassungsmittels (13) ausschnittweise erfassbar ist und wobei das Objekterfassungsmittel (13) mit der Positionsbestimmungseinrichtung (9, 10, 17) gekoppelt ist und mittels der Positionsbestimmungseinrichtung (9, 10, 17) anhand der jeweiligen Position des Objekterfassungsmittels (13) gegenüber dem Werkstück (4) in Führungsrichtung (y-Achse) sowie anhand der jeweiligen Position des Objekterfassungsmittels (13) gegenüber dem Werkstück (4) quer zu der Führungsrichtung (y-Achse) die Positionen erfasster Werkstückausschnitte unter Berücksichtigung eines Sollverlaufs der Führungsbahn der Arbeitsbewegung quer zu der Führungsrichtung (y-Achse) bestimmbar sind, **dadurch gekennzeichnet, dass** für die Positionsbestimmungseinrichtung (9, 10, 17) eine Kalibriereinrichtung vorgesehen ist mit einer Kalibrierlinie (14), die quer zu der Führungsrichtung (y-Achse) der Arbeitsbewegung einen dem Sollverlauf der Führungsbahn entsprechenden tatsächlichen Verlauf aufweist, wobei die Kalibrierlinie (14) und das Objekterfassungsmittel (13) vor einer Arbeitsbewegung entlang der Führungsbahn der Arbeitsbewegung relativ zueinander in Führungsrichtung (y-Achse) bewegbar sind und dabei die Kalibrierlinie (14) mittels des Objekterfassungsmittels (13) ausschnittweise erfassbar ist, dass mittels der Positionsbestimmungseinrichtung (9, 10, 17) anhand der erfassten Ausschnitte der Kalibrierlinie (14) deren Verlauf quer zu der Führungsrichtung (y-Achse) bestimmbar und der so bestimmte Verlauf der Kalibrierlinie (14) mit deren tatsächlichem Verlauf vergleichbar ist und gegebenenfalls anhand festgestellter Abweichungen wenigstens eine Korrekturgröße bestimmbar ist und dass mittels der Positionsbestimmungseinrichtung (9, 10, 17) schließlich bei wenigstens einer nachfolgenden Arbeitsbewegung die Positionen erfasster Werkstückausschnitte bestimmbar sind anhand von Positionen des Objekterfassungsmittels (13) gegenüber dem Werkstück (4), welche sich quer zu der Führungsrichtung (y-Achse) der Arbeitsbewegung gegebenenfalls unter Berücksichtigung einer Korrekturgröße ergeben haben.

6. Vorrichtung nach Anspruch 5, **dadurch gekennzeichnet, dass** das Objekterfassungsmittel (13) und das betreffende Werkstück (4) entlang einer geradlinigen Führungsbahn relativ zueinander bewegbar sind und dass für die Positionsbestimmungseinrichtung (9, 10, 17) eine Kalibriereinrichtung vorgesehen ist mit einer Kalibrierlinie (14), die von einem beidendig befestigten und in Längsrichtung gespannten Draht oder einer entsprechenden Schnur od. dgl. gebildet ist.

7. Vorrichtung zur Erfassung der Geometrie von Werkstücken, mit einem Objekterfassungsmittel (13) und einer Positionsbestimmungseinrichtung (9, 10, 17), wobei das Objekterfassungsmittel (13) und das betreffende Werkstück (4) mit einer geführten zweiachsigen Arbeitsbewegung mit zwei unter einem Achsenwinkel (α) zueinander verlaufenden Führungsachsen (x-Ache, y-Achse) relativ zueinander bewegbar sind und dabei das Werkstück (4) mittels des Objekterfassungsmittels (13) ausschnittweise erfassbar ist und wobei mittels der Positionsbestimmungseinrichtung (9, 10, 17) anhand der jeweiligen Position des Objekterfassungsmittels (13) gegenüber dem Werkstück (4) in Richtung der einen Führungsachse (x-Achse) und anhand der jeweiligen Position des Objekterfassungsmittels (13) gegenüber dem Werkstück (4) in Richtung der anderen Führungsachse (y-Achse) die Positionen erfasster Werkstückausschnitte unter Berücksichtigung eines Sollwertes für den Achsenwinkel (α) der Führungsachsen (x-Achse, y-Achse) bestimmbar sind, **dadurch gekennzeichnet, dass** für die Positionsbestimmungseinrichtung (9, 10, 17) eine Kalibriereinrichtung vorgesehen ist mit einer Kalibrierstrecke, die in wenigstens einer parallel zu der durch die Führungsachsen (x-Achse, y-Achse) definierten Ebene verlaufenden Ebene mit voneinander verschiedenen Winkelstellungen ausrichtbar ist, dass vor einer Arbeitsbewegung das Objekterfassungsmittel (13) und die Kalibrierstrecke bei mit verschiedenen Winkelstellungen ausgerichteter Kalibrierstrecke mit einer einer Arbeitsbewegung entsprechenden Bewegung relativ zueinander bewegbar sind und dabei jeweils die Kalibrierstrecke mittels des Objekterfassungsmittels (13) ausschnittweise erfassbar ist und mittels der Positionsbestimmungseinrichtung (9, 10, 17) jeweils anhand der erfassten Ausschnitte der Kalibrierstrecke eine Länge (l, l*) der Kalibrierstrecke bestimmbar ist und die so bestimmten Längen (l, l*) der Kalibrierstrecke miteinander vergleichbar sind und gegebenenfalls anhand festgestellter Abweichungen wenigstens eine Korrekturgröße bestimmbar ist und dass mittels der Positionsbestimmungseinrichtung (9, 10, 17) schließlich bei wenigstens einer nachfolgenden Arbeitsbewegung die Positionen erfasster Werkstückausschnitte bestimmbar sind unter Berücksichtigung eines Achsenwinkels (α) der Führungsachsen (x-Achse, y-Achse) der sich gegebenenfalls unter Einbeziehung einer Korrekturgröße ergeben hat.

8. Vorrichtung nach Anspruch 7, **dadurch gekennzeichnet, dass** die Kalibriereinrichtung für die Positionsbestimmungseinrichtung (9, 10, 17) eine Kalibrierlinie (14) umfasst, die in Richtung einer ersten Führungsachse (y-Achse) verläuft und in Richtung der zweiten Führungsachse (x-Achse) einen Sollverlauf aufweist, dass vor einer Arbeitsbewegung das Objekterfassungsmittel (13) und die Kalibrierlinie (14) relativ zueinander in Richtung der Kalibrierlinie (14) bewegbar sind und dabei die Kalibrierlinie (14) mittels des Objekterfassungsmittels (13) ausschnittweise erfassbar ist, dass mittels der Positionserfassungseinrichtung (9, 10, 17) anhand der erfassten Ausschnitte der Kalibrierlinie (14) deren Verlauf in Richtung der zweiten Führungsachse (x-Achse) bestimmbar und der so bestimmte Verlauf der Kalibrierline (14) mit deren tatsächlichem Verlauf vergleichbar ist und gegebenenfalls anhand festgestellter Abweichungen wenigstens eine Korrekturgröße bestimmbar ist und dass mittels der Positionsbestimmungseinrichtung (9, 10, 17) schließlich bei wenigstens einer nachfolgenden Arbeitsbewegung die Positionen erfasster Werkstückausschnitte bestimmbar sind anhand von Positionen des Objekterfassungsmittels (13) gegenüber dem Werkstück (4), welche sich in Richtung der zweiten Führungsachse (x-Achse) gegebenenfalls unter Berücksichtigung einer Korrekturgröße ergeben haben.

9. Vorrichtung nach Anspruch 7 oder 8, **dadurch gekennzeichnet, dass** die Kalibrierlinie (14) gebildet ist von einem in Richtung der ersten Führungsachse (y-Achse) verlaufenden, beidendig befestigen und in Längsrichtung gespannten Draht oder einer entsprechenden Schnur od. dgl.

Fig. 1

Fig. 2

**Fig. 3**

**Fig. 4**

**Fig. 5**

**Europäisches Patentamt**

# EUROPÄISCHER RECHERCHENBERICHT

Nummer der Anmeldung

EP 01 12 1528

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 671 541 A (DAI YUZHONG ET AL) 30. September 1997 (1997-09-30) | 1,2,5 | G01B5/008 G01B11/00 G01B21/04 |
| Y | * das ganze Dokument * | 6 | |
| A | | 3,4,7-9 | |
| | ------- | | |
| Y | DE 43 45 095 C (PERTHEN FEINPRUEF GMBH) 22. Juni 1995 (1995-06-22) | 6 | |
| A | * Zusammenfassung; Abbildungen 1,4 * * Spalte 3, Zeile 49 - Spalte 4, Zeile 62 * | 1-5,7-9 | |
| | ------- | | |
| A | US 5 610 846 A (TRAPET EUGEN ET AL) 11. März 1997 (1997-03-11) * Zusammenfassung; Abbildung 10 * * Spalte 4, Zeile 36-59 * * Spalte 12, Zeile 50-63 * | 1-9 | |
| | ------- | | |
| A | US 4 939 678 A (BECKWITH JR WALTER L) 3. Juli 1990 (1990-07-03) * Zusammenfassung; Abbildung 2 * | 1-9 | |
| | ----- --- --- --- --- | | RECHERCHIERTE SACHGEBIETE (Int.Cl.7) |
| | | | G01B |

Der vorliegende Recherchenbericht wurde für alle Patentansprüche erstellt

| Recherchenort | Abschlußdatum der Recherche | Prüfer |
|---|---|---|
| MÜNCHEN | 7. Februar 2002 | Beyfuß, M |

EPO FORM 1503 03.82 (P04C03)

**EP 1 291 614 A1**

## ANHANG ZUM EUROPÄISCHEN RECHERCHENBERICHT
## ÜBER DIE EUROPÄISCHE PATENTANMELDUNG NR.

EP 01 12 1528

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-02-2002

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US 5671541 | A | | 30-09-1997 | KEINE | | | |
| DE 4345095 | C | | 22-06-1995 | DE | 4345095 | C1 | 22-06-1995 |
| US 5610846 | A | | 11-03-1997 | DE | 19518268 | A1 | 30-11-1995 |
| | | | | EP | 0684447 | A2 | 29-11-1995 |
| | | | | EP | 0684448 | A2 | 29-11-1995 |
| | | | | JP | 7324928 | A | 12-12-1995 |
| | | | | JP | 7324929 | A | 12-12-1995 |
| US 4939678 | A | | 03-07-1990 | US | 4884889 | A | 05-12-1989 |
| | | | | AT | 99410 | T | 15-01-1994 |
| | | | | DE | 3886767 | D1 | 10-02-1994 |
| | | | | DE | 3886767 | T2 | 11-05-1994 |
| | | | | EP | 0386115 | A1 | 12-09-1990 |
| | | | | JP | 2694986 | B2 | 24-12-1997 |
| | | | | JP | 3501052 | T | 07-03-1991 |
| | | | | WO | 8904945 | A1 | 01-06-1989 |

EPO FORM P0461

Für nähere Einzelheiten zu diesem Anhang : siehe Amtsblatt des Europäischen Patentamts, Nr.12/82